# EUROPÄISCHE PATENTANMELDUNG

(11) **EP 2 505 732 A2**
(43) Veröffentlichungstag der Anmeldung: **03.10.2012**
(21) Anmeldenummer: 12157624.3
(22) Anmeldetag: 01.03.2012
(51) Int. Cl.: E04D 1/30, F16L 5/00

(54) **Aus Grundplatte und Abdichtelement zum Durchtritt eines Befestigungselementes aufgebautes Dacheindeckungselement**

(30) Priorität: 31.03.2011 DE 102011001692
(71) Anmelder: Monier Roofing Components GmbH, 61440 Oberursel (DE)
(72) Erfinder: Sattler, Manfred, 63110 Rodgau (DE)
(74) Vertreter: Grundmann, Dirk

(57) **Zusammenfassung**

Anstelle einer Dacheindeckungsplatte (1) in eine Dacheindeckung (2) eines Steildachs einsetzbares Dacheindeckungselement (3), aufweisend ein Abdichtelement (11), das eine Manschette (15) ausbildet, die einen zur Dachaußenseite weisenden Durchtrittsbereich (13) für ein an der Dachunterkonstruktion (6, 7, 8) insbesondere an einem Dachsparren (7) oder an einer Konterlatte (8) befestigbares Befestigungselement (9) aufweist, und die mit dem Rand (15ʹ) eine zur Dachinnenseite weisende Durchtrittsöffnung (16) des Abdichtelementes (11) umgibt. Wesentlich ist, dass die Manschette (15) derart ausgebildet ist, dass der zur Dachaußenseite weisende Durchtrittsbereich (13) des in einem Steildach eingebauten Dichtelementes (3) tiefer liegt, als die zur Dachinnenseite weisende Durchtrittsöffnung (16). Wesentlich ist ferner eine Grundplatte, die aus zumindest zwei getrennten Grundplattenteilen (4, 5) besteht, die im Bereich eines Durchtrittsfreiraumes (10) fügbar sind.

## Beschreibung

Die Erfindung betrifft eine anstelle einer Dacheindeckungsplatte in eine Dacheindeckung eines Steildachs einsetzbares Dacheindeckungselement, aufweisend ein Abdichtelement, das eine Manschette ausbildet, die einen zur Dachaußenseite weisenden Durchtrittsbereich für ein an der Dachunterkonstruktion insbesondere an einem Dachsparren oder an einer Konterlatte befestigbares Befestigungselement aufweist, und die mit dem Rand eine zur Dachinnenseite weisende Durchtrittsöffnung des Abdichtelementes umgibt..

Eine gattungsgemäße Dacheindeckungsplatte beschreibt die DE 1871356. Es handelt sich um einen Stutzen, der um Stäbe, Seile oder dergleichen gelegt werden kann. Der Stutzen ist biegeflexibel einer Dacheindeckungsplatte angeformt, so dass er in verschiedene Richtungen gebogen werden kann.

Die Erfindung betrifft darüber hinaus eine Dacheindeckungsplatte mit einer Grundplatte, die aus zumindest zwei getrennten Grundplattenteilen besteht. Eine derartige Dacheindeckungsplatte ist aus der DE 3922624 A1 vorbekannt. Die Grundplatte besteht aus zwei zusammenschiebbaren Grundplattenteilen, von denen jeweils eine einen Teilabschnitt einer Manschette ausbildet, so dass die Manschette um einen bereits aufgeständerten Mast gelegt werden kann, ohne dass der Fuß des Mastes von seiner Befestigung entfernt werden müsste.

Eine zweiteilige Dachdurchführung für eine Rohrleitung beschreibt auch die DE 297 21 602 U1.

Aus der WO 2009/129799 A1 ist ein Dacheindeckungselement bekannt, welches anstelle einer Dacheindeckungsplatte in eine Dacheindeckung eingesetzt werden kann. Das Dacheindeckungselement besitzt eine Grundplatte, die derart in der Dacheindeckung befestigbar ist, dass ein von der Grundplatte ausgebildeter Durchtrittsfreiraum oberhalb des Sparrens liegt, an dem ein Befestigungselement befestigt ist, der einen Befestigungsschenkel ausbildet, der durch den Durchtrittsfreiraum nach außen ragt. An dem Befestigungselement können Dachtritte, Solarpaneele oder andere Aufdachelemente befestigt werden. Zur Abdichtung ist ein Dichtelement vorgesehen, welches eine Manschette mit sich quer zur Dachebene erstreckenden Lippen aufweist, die in dichtender Anlage am Befestigungsschenkel anliegen.

Der Erfindung liegt die Aufgabe zugrunde, ein gattungsgemäßes Dacheindeckungselement gebrauchsvorteilhaft weiterzubilden.

Gelöst wird die Aufgabe durch die in den Ansprüchen angegebene Erfindung.

Zunächst und im Wesentlichen wird vorgeschlagen, dass die Manschette von einem Beutelabschnitt gebildet ist, wobei zwei von den Wänden des Beutelabschnittes gebildete Lippen im Wesentlichen parallel zueinander verlaufen und sich parallel oder in einem spitzen Winkel zum Flächenabschnitt erstrecken, wobei der Durchtrittsbereich im Bodenbereich des Beutels liegt. Die Manschette ist somit derart ausgebildet, dass der zur Dachaußenseite weisende Durchtrittsbereich der Manschette tiefer liegt, als die zur Dachinnenseite weisende Durchtrittsöffnung. Die sich ausbildenden Lippen verlaufen dann parallel oder in einem spitzen Winkel zur Erstreckungsebene des Dichtelementes, und zwar derart, dass sie mit ihrem Durchtrittsbereich in Richtung zur Traufe weisen. Zufolge dieser Ausgestaltung weist die Durchtrittsöffnung, durch die das Befestigungselement von der Dachinnenseite zur Dachaußenseite ragt, nach unten, so dass ein Wassereintritt durch den Schlitz zwischen den Lippen und dem bevorzugt von einem Flacheisen gebildeten Befestigungselement vermindert oder verhindert wird. In einer Weiterbildung der Erfindung ist vorgesehen, dass das Abdichtelement einen ebenen Abschnitt aufweist. Es kann eine Grundplatte vorgesehen sein, die sich dachinnenseitig in etwa parallel oder nahezu parallel zum Dichtelement erstreckt. Der ebene Flächenabschnitt erstreckt sich im Wesentlichen über die gesamte Grundplatte. Des Weiteren ist vorgesehen, dass der Flächenabschnitt eine Durchtrittsöffnung aufweist, durch die das Befestigungselement hindurchragen kann. Es ist ferner ein Beutelabschnitt vorgesehen, dessen Rand an der Außenseite des Flächenabschnittes derart befestigt ist, dass der Rand die Durchtrittsöffnung umgibt. Der Beutelabschnitt bildet einen sackartigen Fortsatz des Flächenabschnittes aus, der im montierten Zustand des Abdichtelementes schräg nach unten weist. Er verläuft im Wesentlichen parallel zur Erstreckungsrichtung der Dacheindeckungsplatte zur Traufe. Der Bodenbereich des Beutelabschnittes kann von einer Knicklinie gebildet sein. Dem Bodenbereich ist der Durchtrittsbereich zugeordnet. Die Lippen werden dementsprechend von den Wänden des Beutelabschnittes gebildet. Diese Wände verlaufen im Wesentlichen parallel zueinander. In einem Montagegrundzustand kann der Boden des Beutels geschlossen sein. Die Lippen sind hierzu im Bereich des Beutelbodens miteinander verbunden. Es ist aber bevorzugt, dass der Beutel materialeinheitlich gefertigt ist, so dass der Boden von einer geschlossenen Knicklinie ausgebildet sein kann. Es kann aber auch vorgesehen sein, dass insbesondere in Eckbereichen des Beutelbodens Wasseraustrittsöffnungen vorgesehen sind. Diese können auch dadurch gefertigt werden, dass Eckabschnitte im Beutelbodenbereich abgeschnitten werden. Die Durchtrittsöffnungen sind im Durchtrittsbereich, also im Bereich des Beutelbodens, nach Bedarf dadurch gefertigt, dass der Beutelboden dort aufgetrennt wird. In den Beutelboden kann eine Durchtrittsöffnung eingeschnitten werden. Das Abdichtelement kann einen Klebestreifen aufweisen, um es mit der Grundplatte oder mit einer Dacheindeckungsplatte zu verkleben. Ferner ist vorgesehen, dass beidseitig des sackartigen Fortsatzes Wasserkanäle angeordnet sind, die von hochstehenden Rippen ausgebildet sind. Auch der Rand des Abdichtelementes kann von einer hochgezogenen Rippe ausgebildet sein. Das Abdichtelement kann ferner gewellte Zonen ausbilden, die eine Dehnungsreserve ausbilden. Ferner ist vorgesehen, dass dem Kopf des Abdichtelementes ein bevorzugt ebenfalls gewellter Lappen angeformt ist, der eine Dichtlasche ausbildet, die sich im montierten Zustand an der Unterseite der kopfseitig angeordneten Dacheindeckungsplatte anlegt.

Die Erfindung betrifft darüber hinaus auch eine Weiterbildung einer Grundplatte. Diese ist aus zumindest zwei getrennten Grundplattenteilen zusammengesetzt. Die Fügelinie, an der die Grundplattenteile miteinander verbunden sind, verläuft durch den Durchtrittsfreiraum. Bevorzugt sind die Grundplattenteile im Wege einer Steckzuordnung miteinander verbindbar, so dass die Breite der Grundplatte eingestellt werden kann. Im zusammengesteckten Zustand bilden die Grundplattenteile einen ringsum geschlossenen Rand, der den Durchtrittsfreiraum bildet. Der Durchtrittsfreiraum kann von ein oder mehreren entfernten oder umgeschlagenen Laschen der beiden Grundplattenteile ausgebildet sein. Zur Ausbildung der Laschen weisen die Grundplattenteile von ihrer Fügekante ausgehende Einschnitte auf, die ein oder mehrere entfernbare oder umschlagbare Laschen ausbilden, so dass sich ein Durchtrittsfreiraum für das Befestigungselement ausbildet. Von der Fügekante können darüber hinaus auch Befestigungsschlitze ausgehen, in die jeweils die andere Grundplatte eingesteckt werden kann, so dass sich eine überlappende Steckzuordnung ausbildet. Ferner ist vorgesehen, dass die Grundplatte hochgestellte Randabschnitte aufweist, die im montierten Zustand unterhalb der benachbarten Dacheindeckungsplatten liegen. Ferner können kopfseitige Federstege vorgesehen sein, die mit der Dichtlasche des Abdichtelementes zusammenwirken. Die Federstege können sich ebenso wie die Dichtlasche an der Unterseite der kopfseitigen Dacheindeckungsplatte abstützen.

Das erfindungsgemäße Dacheindeckungselement zeichnet sich ferner durch ein besonders gestaltetes Befestigungselement aus, dass am Sparren oder an einer Konterlatte befestigbar ist. Das Befestigungselement weist einen etwa parallel zur Sparrenerstreckungsrichtung verlaufenden Durchtrittsschenkel auf, der durch den sackartigen Fortsatz, also durch den Beutelabschnitt, hindurchragt. Er tritt im Bereich des Durchtrittsfreiraums durch die Grundplatte und durch eine Durchtrittsöffnung durch den Flächenabschnitt des Abdichtelementes. Sein Durchtrittsschenkel erstreckt sich durch den Beutelabschnitt und tritt durch die im Durchtrittsbereich angeordnete Durchtrittsöffnung, also durch den Boden des Beutelabschnitts nach außen.

Ein Ausführungsbeispiel wird nachfolgend anhand beigefügter Zeichnungen erläutert. Es zeigen:
- Fig. 1: in perspektivischer Darstellung das Dacheindeckungselement, wie es anstelle einer Dacheindeckungsplatte in einer Dacheindeckung eingesetzt ist;
- Fig. 2: einen Schnitt gemäß der Linie II-II in Fig. 1;
- Fig. 3: eine perspektivische Außenseitenansicht des Abdichtelementes;
- Fig. 4: eine perspektivische Innenseitenansicht des Abdichtelementes;
- Fig. 5: einen Schnitt gemäß der Linie V-V in Fig. 3;
- Fig. 6: eine perspektivische Darstellung der beiden Grundplattenteile im nicht zusammengesteckten Zustand, wobei das Grundplattenteil ohne Federstege dargestellt ist;
- Fig. 7: eine erste Darstellung der beiden Grundplattenteile im zusammengesteckten Zustand und zurückgeklappten Laschen;
- Fig. 8: eine Darstellung gemäß Fig. 7, jedoch bis auf die minimale Breite zusammengesteckt;

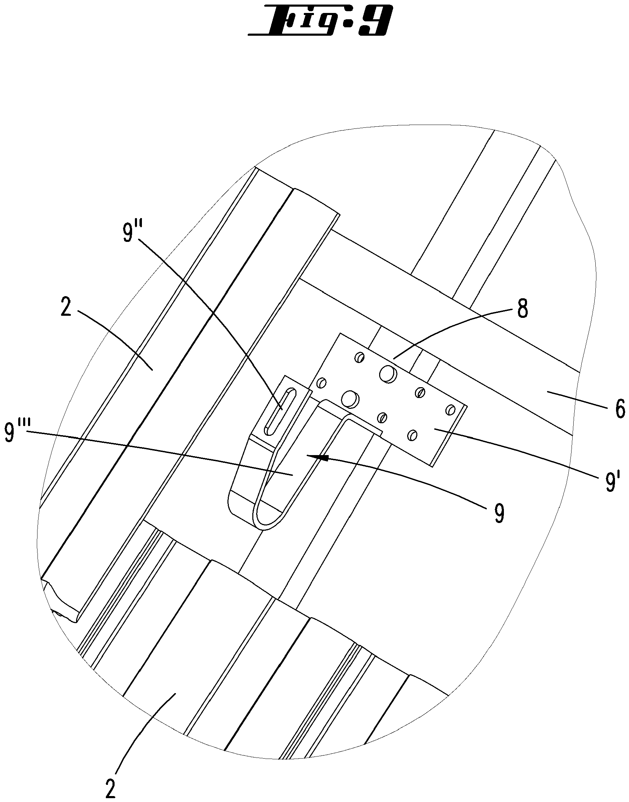

- Fig. 9: eine perspektivische Darstellung des teilweise eingedeckten Dachs im Bereich eines an einer Konterlatte montierten Befestigungselement;
- Fig. 10: eine Folgedarstellung zu Fig. 9, wobei die Grundplatte anstelle einer Dacheindeckungsplatte in einer Lücke zwischen insgesamt vier Dacheindeckungsplatten an der Dachunterkonstruktion befestigt ist und
- Fig. 11: eine weitere Folgedarstellung zu Fig. 9, wobei das Abdichtelement montiert ist.

Die Zeichnungen zeigen ein auf einer Konterlatte 8 bzw. auf einem Dachsparren 7 befestigtes Befestigungselement 9, welches einen Fuß 9' aufweist, mit dem es an dem Sparren 7 bzw. der Konterlatte 8 angeschraubt ist. Vom Fuß 9' ragt ein erster Abschnitt quer zur Sparrenerstreckungsrichtung ab. An diesen Abschnitt schließt sich ein Durchtrittsschenkel 9"' an, der im Wesentlichen parallel zur Dachsparren-Erstreckungsrichtung verläuft. Er kann auch einen geringen Neigungswinkel zur Dachsparren-Erstreckungsrichtung aufweisen. An den Durchtrittsschenkel 9"' schließt sich ein Befestigungsabschnitt mit einer Befestigungsöffnung 9" an, an die Dachaufbauten, insbesondere in Form der eingangs genannten Aufdachelemente befestigt werden können.

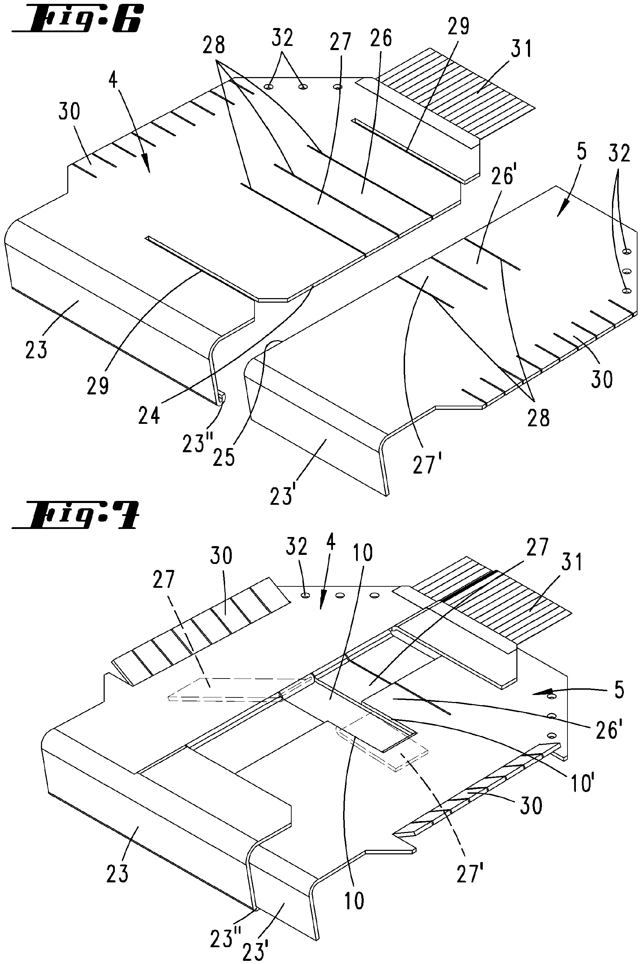

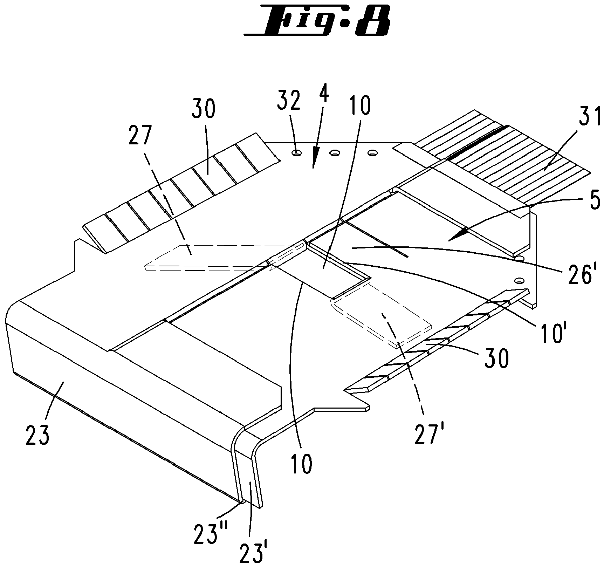

Die Fig. 6 zeigt zwei Grundplattenteile 4, 5, die aus Blech bestehen und die, wie sich aus den Fig. 7 und 8 ergibt, in unterschiedlicher Gesamtbreite zusammengesteckt werden können. Hierzu wird eine Fügekante 25 des Grundplattenteiles 5 in zwei Befestigungsschlitze 29 des anderen Grundplattenteiles 4 eingesteckt, wobei sich die Befestigungsschlitze 29 von der Fügekante 24 des Grundplattenteiles 4 erstrecken. Zwei äußere Abschnitte der Fügekante 24 liegen dabei oberhalb des Gehäusegrundplattenteiles 5. Ein mittlerer Bereich des Grundplattenteiles 4 liegt unterhalb des Grundplattenteiles 5.

Parallel zu dem Befestigungsschlitz 29 weist die Grundplatte 4 insgesamt drei Einschnitte 28 auf, die ebenfalls von der Fügekante 24 ausgehen und abtrennbare oder umschlagbare Laschen 26, 27 ausbilden.

Von der Fügekante 25 gehen ebenfalls Einschnitte 28 aus, die zwischen sich Laschen 26', 27' belassen.

Die beiden nach außen weisenden Ränder 30 der beiden Grundplattenteile 4, 5 sind nach oben hochgestellt. Wie aus den Fig. 7 und 8 ersichtlich ist, ist an die beiden Kopfabschnitte der Grundplattenteile 4, 5 jeweils ein kammartiger Fortsatz befestigt, der Federstege 31 ausbildet. Diese Federstege können ein separates kammartiges Element ausbilden, das auf den Kopf des Grundplattenteiles 4 aufgesteckt ist. Es kann lösbar oder fest mit dem Grundplattenteil 4 verbunden sein. Die beiden Grundplattenteile 4, 5 weisen darüber hinaus Nagellöcher 32 auf, mit denen die Grundplattenteile 4, 5 an der Dachunterkonstruktion mittels Nägeln befestigbar sind.

Am Fußabschnitt der Grundplattenteile 4, 5 sind Abwinklungen 23, 23' vorgesehen. Diese, an der zur Traufe weisenden Seite der Grundplattenteile 4, 5 angeordneten Stege können sich an der unterhalb der Grundplatte 4, 5 angeordneten Dacheindeckungsplatte 2 abstützen. Die Schmalseiten der derart ausgebildeten Stützlaschen 23, 23' können sich zudem auf der Konterlatte 8 bzw. auf dem Sparren 7 abstützen, um die Grundplatte 4, 5 in einer Parallellage zum Abdichtelement 11 zu halten. Eine der beiden Stützlaschen 23 besitzt an ihrem freien Ende eine U-förmig abgebogene Führungslasche 23". In den so ausgebildeten U-Zwischenraum kann das freie Ende der Stützlasche 23' des anderen Grundplattenteiles 5 eingeschoben werden.

Den Fig. 7 und 8 ist zu entnehmen, dass durch Umklappen der Laschen 27, 27' ein Durchtrittsfreiraum 10 erzeugbar ist, dessen Rand 10' von beiden Grundplattenteilen 4, 5 ausgebildet ist. Jeder Grundplattenteil 4, 5 bildet einen U-förmig begrenzten randoffenen Freiraum aus, der im zusammengesteckten Zustand ringsumschlossen ist. Werden anstelle der Laschen 27, 27' die Laschen 26, 26' umgelegt, so befindet sich der Durchtrittsfreiraum 10 an einer anderen Stelle.

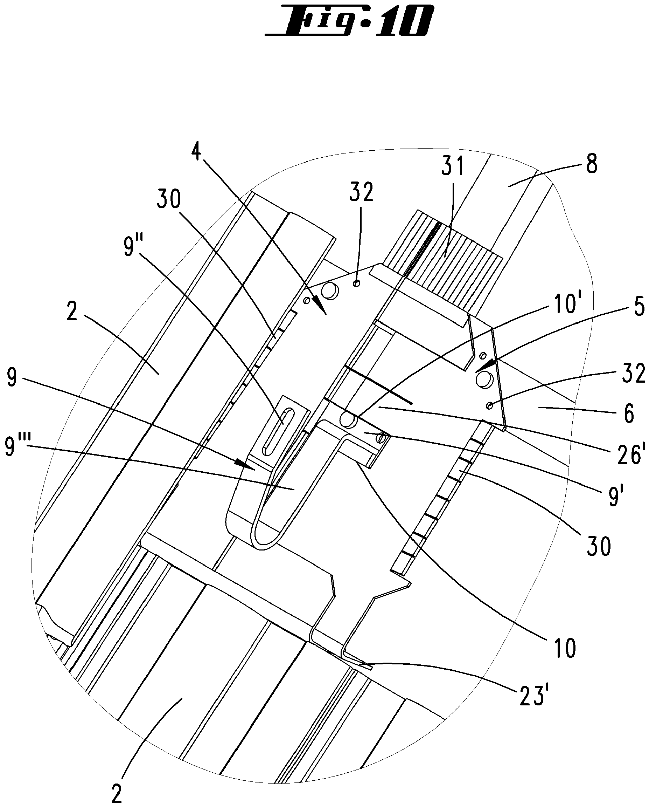

Die derartig beschriebene Grundplatte 4, 5 wird in der in Fig. 10 dargestellten Weise anstelle einer Dacheindeckungsplatte 2 in eine Dacheindeckung 1 derart eingesetzt, dass das Befestigungselement 9 durch den Durchtrittsfreiraum 10 hindurchragt. Die Randabschnitte 30 werden dabei von den horizontal benachbarten Dacheindeckungsplatten 2 überfangen. Der Kopfabschnitt, dem die Federstege 31 zugeordnet sind, wird von einer oberhalb des Dacheindeckungselementes 3 angeordneten Dacheindeckungsplatte 2 derart überfangen, dass die U-förmig gebogenen Federstege 31 an der Unterseite dieser Dacheindeckungsplatte 2 anliegen.

Der Fußbereich der Grundplatte 4, 5 kann sich mit den oben bereits erwähnten Stützlaschen 23, 23' an der unterhalb des Dacheindeckungselementes 3 angeordneten Dacheindeckungsplatte 2, aber auch an der Dachunterkonstruktion 7 bzw. 8 abstützen. Alternativ zu diesen Stützlaschen 23, 23' kann aber auch eine Befestigungsleiste verwendet werden, die an der Dachunterkonstruktion 7 befestigt wird und auf der der Fuß der Grundplatte 4, 5 aufliegt bzw. an der sich der Fuß abstützt.

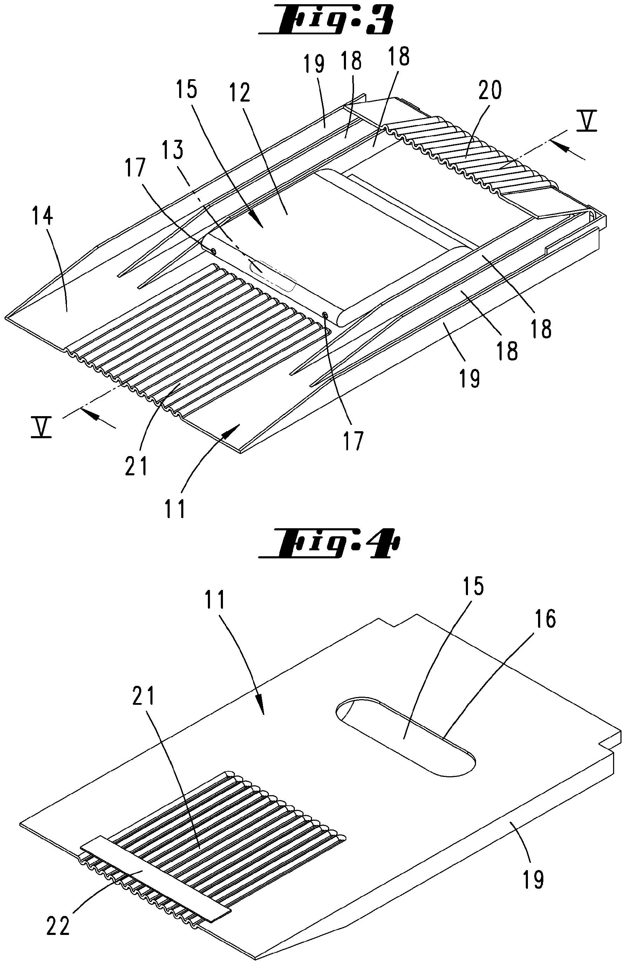

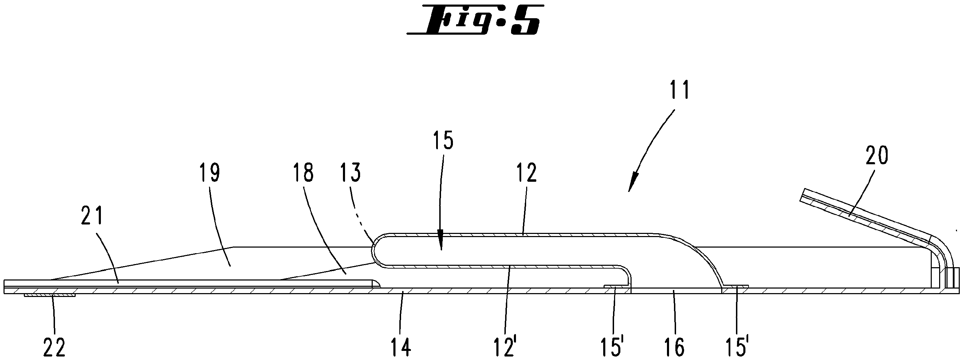

Es ist ferner ein Abdichtelement vorgesehen, dessen Ausgestaltung den Fig. 3 bis 5 zu entnehmen ist. Das Abdichtelement 11 besteht aus einem ersten Abschnitt, nämlich einem Flächenabschnitt 14, der aus einem elastischen Material, einem Kunststoff oder aus Gummi bestehen kann. Im traufenseitigen Bereich besitzt das Abdichtelement 11 einen gewellten Abschnitt 21, der eine Reckreserve ausbildet. Auf der zur Dachinnenseite weisenden Rückseite des Abdichtelementes 11 ist im Bereich des gewellten Abschnitts 21 ein Klebestreifen 22 vorgesehen, mit dem die Unterseite des Abdichtelementes 11 auf der Oberseite einer Dacheindeckungsplatte 2 aufgeklebt werden kann.

An dem Kopf des Abdichtelementes 11 ist eine ebenfalls gewellte Dichtlasche 20 angeformt, die im montierten Zustand von der unteren Randkante der oberhalb des Dachelementes 3 liegenden Dacheindeckungsplatte 2 übergriffen wird. Rückwärtig der Dichtlasche 20 erstrecken sich die Federstege 31.

In den beiden Längsrändern des Abdichtelementes 11 erstrecken sich äußere Wasserführungsrippen 19 und kürzere, innere Wasserführungsrippen 18.

Wie der Fig. 4 zu entnehmen ist, ist in den Flächenabschnitt 14 des Abdichtelementes 11 eine im montierten Zustand sich in Horizontalrichtung erstreckende Öffnung 16 eingeschnitten. Es handelt sich hierbei um eine Durchtrittsöffnung 16, durch die der quer zur Sparrenerstreckungsrichtung verlaufende Abschnitt des Befestigungselementes 9 hindurchragen kann. Die Durchtrittsöffnung 16 befindet sich im montierten Zustand oberhalb des Durchtrittsfreiraumes 10.

Das Abdichtelement 11 weist einen zweiten Abschnitt, nämlich den Beutelabschnitt 15 auf. Der Beutelabschnitt 15 kann materialeinheitlich mit dem Flächenabschnitt 14 verbunden sein. In dem Ausführungsbeispiel sind es jedoch zwei getrennte Teile, die unter Ausbildung einer Klebestelle im Bereich des Randes 15' des Beutelabschnittes 15 miteinander verbunden sind.

Wesentlich ist aber, dass der Rand 15' des Beutelabschnittes 15 eine geschlossene Verbindungslinie ausbildet, die sich ringsum die Durchtrittsöffnung 16 erstreckt. Der Beutelabschnitt 15 bildet so einen sackartigen Fortsatz des Abdichtelementes 11 aus.

Der aus einem elastischen Werkstoff, bspw. Kunststoff oder Gummi, gefertigte Beutelabschnitt 15 ist dabei so geformt, dass seine Breitseitenwände im Wesentlichen parallel zur Erstreckungsrichtung des Flächenabschnittes 14 verlaufen. Der Boden 15" des Beutelabschnittes 15 bildet eine Knicklinie aus, die sich im montierten Zustand in Horizontalrichtung erstreckt. Es handelt sich dabei um eine Schmalseitenwand des Beutelabschnittes 15. Diese Schmalseitenwand 15"' des Beutelabschnittes 15 weist im montierten Zustand zur Traufe.

Im Montage-Grundzustand ist der Boden 15" geschlossen. Es können allerdings Entwässerungsöffnungen 17 in den Eckbereichen des Beutelabschnittes 15 vorgesehen sein. Diese Entwässerungsöffnungen 17 können auch durch abgetrennte Ecken des Beutelabschnittes 15 im Bereich des Bodens 15" ausgebildet sein. In einem nicht dargestellten Ausführungsbeispiel ist der Boden 15" bereits im Montagegrundzustand geöffnet, so dass keine gesonderte Durchtrittsöffnung 13 dort eingeschnitten werden muss.

Der Beutelabschnitt 15 ist hinsichtlich seiner Länge derart an die Länge des Durchtrittsschenkels 9"' des Befestigungselementes 9 angepasst, dass das Ende des Durchtrittsschenkels 9"', dem sich ein gekrümmter Abschnitt des Befestigungselementes 9 anschließt, durch eine Durchtrittsöffnung 13 des Bodens 15' hindurchtreten kann. Diese Durchtrittsöffnung 13 wird nach Bedarf in den geschlossenen Boden 15" eingeschnitten. Sie kann aber auch vorgefertigt werden.

Die beiden Breitseitenwände des Beutelabschnittes 15 bilden im Wesentlichen parallel zueinander verlaufende Lippen 12 aus, die sogar dichtend an dem von einem Flacheisen ausgebildeten Befestigungselement 9 anliegen können. Eine dichtende Anlage der Dichtlippen 12, 12' am Durchtrittsschenkel 9"' ist aber nicht erforderlich.

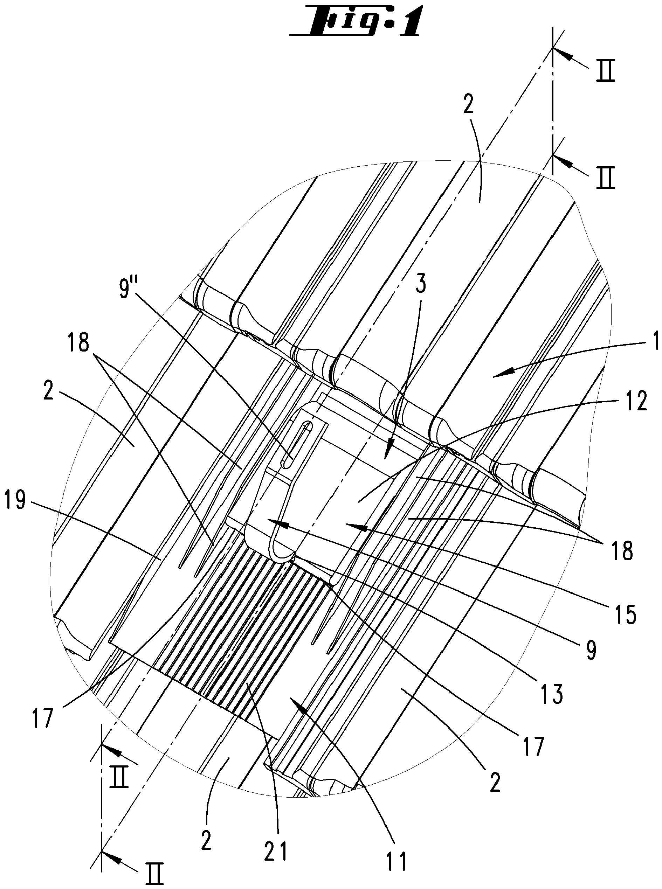

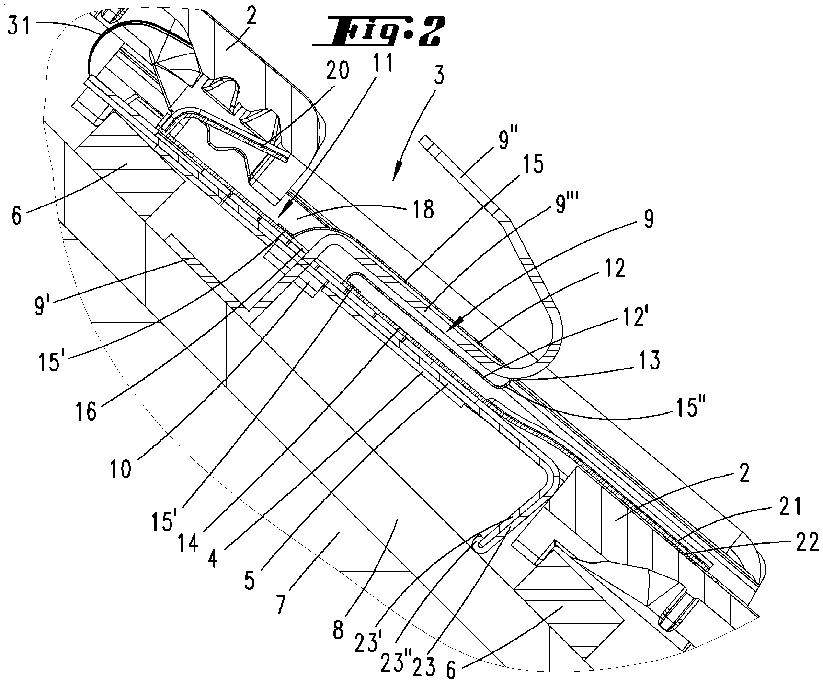

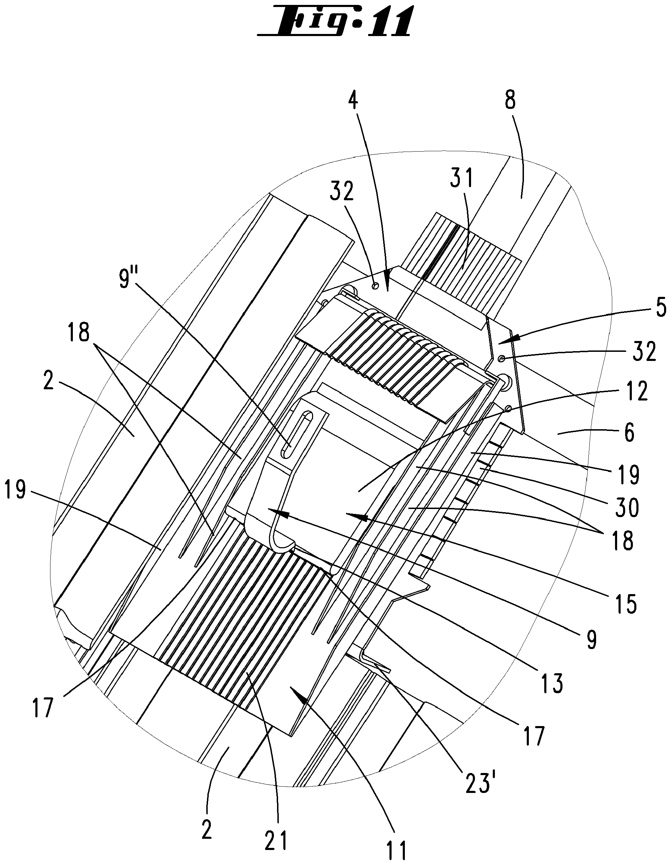

Ausgehend von der in der Fig. 10 dargestellten Montagestellung wird das freie Ende 9" des Befestigungselementes 9 durch die Durchtrittsöffnung 16 gesteckt und durch das Innere des Beutelabschnittes 15 hindurchgesteckt, bis es aus der Durchtrittsöffnung 13 wieder herausragt. Das Abdichtelement 11 wird dann so weit über das Befestigungselement geschoben, dass die in der Fig. 11 bzw. in den Fig. 1 und 2 dargestellte Endmontagestellung erreicht ist, in der der Durchtrittsschenkel 9"' des Befestigungselementes 9 durch den sackartigen Fortsatz, der vom Beutelabschnitt 15 gebildet ist, hindurchragt.

Es sei angemerkt, dass zur Erfindung auch solche Befestigungselemente gehören, deren Befestigungsschenkel 9"' nicht exakt parallel zur Sparrenerstreckungsrichtung verlaufen, sondern nur im Wesentlichen parallel, d.h. einen spitzen Winkel zum Verlauf des Sparrens 7 ausbilden. Dasselbe gilt für das Abdichtelement 11. Die Erfindung umfasst auch solche Abdichtelemente 11, bei denen die Lippen 12, 12' nicht exakt parallel zueinander bzw. zur Grundplatte 4, 5 oder zum Abdichtelement 11 verlaufen. Die Erfindung umfasst auch solche Abdichtelemente 11, bei denen die Lippen 12, 12' einen spitzen Winkel zueinander besitzen bzw. die Lippen 12, 12' in einem spitzen Winkel zum Flächenabschnitt 14 bzw. zur Grundplatte 4, 5 aufweisen, wobei letzteres in den Zeichnungen dargestellt ist. Wesentlich ist aber, dass sich die Lippen 12, 12' nicht in Querrichtung zur Sparrenerstreckungsrichtung erstrecken. Die Lippen 12, 12' sollen sich bevorzugt abwärts erstrecken, so dass im montierten Zustand die Durchtrittsöffnung 13 in Vertikalrichtung unterhalb der Durchtrittsöffnung 16 liegt.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

### Bezugszeichenliste:

- 1: Dacheindeckung
- 2: Dacheindeckungsplatte
- 3: Dacheindeckungselement
- 4: Grundplatte, Grundplattenteil
- 5: Grundplatte, Grundplattenteil
- 6: Dachlatte
- 7: Sparren
- 8: Konterlatte
- 9: Befestigungselement
- 9': Fuß
- 9": Befestigungsöffnung
- 9"': Durchtrittsschenkel
- 10: Durchtrittsfreiraum
- 10': Rand
- 11: Abdichtelement
- 12: Lippe
- 12': Lippe
- 13: Durchtrittsöffnung, Durchtrittsbereich
- 14: Flächenabschnitt
- 15: Beutelabschnitt
- 15': Rand
- 15": Boden
- 16: Durchtrittsöffnung
- 17: Entwässerungsöffnung
- 18: Wasserführungsrippe
- 19: Wasserführungsrippe
- 20: Dichtlasche
- 21: Gewellter Abschnitt
- 22: Klebestreifen
- 23: Stützlasche
- 23': Stützlasche
- 23": Führungslasche
- 24: Fügekante
- 25: Fügekante
- 26: Lasche
- 26': Lasche
- 27: Lasche
- 27': Lasche
- 28: Einschnitt
- 29: Befestigungsschlitz
- 30: Randabschnitt
- 31: Federsteg
- 32: Nagelloch

## Patentansprüche

1. Anstelle einer Dacheindeckungsplatte (1) in eine Dacheindeckung (2) eines Steildachs einsetzbares Dacheindeckungselement (3), aufweisend ein Abdichtelement (11), das eine Manschette (15) ausbildet, die einen zur Dachaußenseite weisenden Durchtrittsbereich (13) für ein an der Dachunterkonstruktion (6, 7, 8) insbesondere an einem Dachsparren (7) oder an einer Konterlatte (8) befestigbares Befestigungselement (9) aufweist, und die mit dem Rand (15') eine zur Dachinnenseite weisende Durchtrittsöffnung (16) des Abdichtelementes (11) umgibt, wobei die Manschette (15) derart ausgebildet ist, dass der zur Dachaußenseite weisende Durchtrittsbereich (13) des in einem Steildach eingebauten Dichtelementes (3) tiefer liegt, als die zur Dachinnenseite weisende Durchtrittsöffnung (16), **dadurch gekennzeichnet, dass** die Manschette von einem Beutelabschnitt (15) gebildet ist, wobei zwei von den Wänden des Beutelabschnittes (15) gebildete Lippen (12, 12') im Wesentlichen parallel zueinander verlaufen und sich parallel oder in einem spitzen Winkel zum Flächenabschnitt (14) erstrecken, wobei der Durchtrittsbereich (13) im Bodenbereich (15") des Beutels liegt.

2. Dacheindeckungselement nach Anspruch 1 oder insbesondere danach, **dadurch gekennzeichnet, dass** das Abdichtelement (11) einen Flächenabschnitt (14) aufweist, dessen Kopf und Seitenränder von unmittelbar benachbarten Dacheindeckungsplatten (1) überdeckt ist und der Beutelabschnitt (15) mit seinem Rand (15') die Durchtrittsöffnung (16) des Flächenabschnitts (14) umfassend, am Flächenabschnitt (14) befestigt ist, wobei der Bodenbereich (15") von einer Knicklinie gebildet ist.

3. Dacheindeckungselement nach einem der vorhergehenden Ansprüche oder insbesondere danach, **dadurch gekennzeichnet, dass** die beiden Lippen (12, 12') im Bereich des Beutelbodens (15") in einem Montagegrundzustand miteinander verbunden sind und bei der Montage zur Erzeugung einer zur Dachaußenseite weisenden Durchtrittsöffnung (13) nach Bedarf auftrennbar sind.

4. Dacheindeckungselement nach einem der vorhergehenden Ansprüche oder insbesondere danach, **dadurch gekennzeichnet, dass** das Abdichtelement (11) auf seiner Rückseite mit einem Klebestreifen (22) versehen ist, mit dem es an der Grundplatte oder an einer Dacheindeckungsplatte (2) anklebbar ist.

5. Dacheindeckungselement nach einem der vorhergehenden Ansprüche oder insbesondere danach, **dadurch gekennzeichnet, dass** der Boden (15") des Beutelabschnittes (15) insbesondere in Eckbereichen Wasseraustrittsöffnungen (17) aufweist.

6. Dacheindeckungselement nach einem der vorhergehenden Ansprüche oder insbesondere danach, **dadurch gekennzeichnet, dass** der Flächenabschnitt (14) mit in Dachneigungsrichtung verlaufenden Wasserführungsrippen (18, 19) ausgestattet ist.

7. Dacheindeckungselement nach einem der vorhergehenden Ansprüche oder insbesondere danach, **dadurch gekennzeichnet, dass** dem Abdichtelement (11) kopfseitig eine Dichtlasche (20) angeformt ist, die sich im verlegten Zustand an der Unterseite einer Dacheindeckungsplatte (2) anlegt.

8. Dacheindeckungselement nach einem der vorhergehenden Ansprüche oder insbesondere danach, **gekennzeichnet durch** eine zumindest aus zwei getrennten Grundplattenteilen (4, 5) bestehende Grundplatte, die dachinnenseitig des Abdichtelementes (11) an der Dachunterkonstruktion (6, 7, 8) befestigbar ist und einen Durchtrittsfreiraum (10) ausbildet.

9. Anstelle einer Dacheindeckungsplatte (1) in eine Dacheindeckung (2) einsetzbares Dacheindeckungselement mit einer Grundplatte (4, 5), die an einer Dachunterkonstruktion (6, 7, 8) befestigbar ist und die einen Durchtrittsfreiraum (10) für ein an der Dachunterkonstruktion (6, 7, 8) insbesondere an einem Dachsparren (7) oder an einer Konterlatte (8) befestigbares Befestigungselement (9) aufweist, und mit einem Abdichtelement (11), das sich dachaußenseitig der Grundplatte (4, 5) erstreckt und das zwei im Wesentlichen parallel verlaufende Lippen (12, 12') aufweist, zwischen denen in einem Durchtrittsbereich (13) das Befestigungselement (9) von der Innenseite der Dacheindeckung (1) zur Außenseite der Dacheindeckung (1) hindurchtreten kann oder Dacheindeckungselement nach einem oder mehreren der Ansprüche 1 bis 8 oder insbesondere danach, **dadurch gekennzeichnet, dass** die Grundplatte aus zumindest zwei getrennten Grundplattenteilen (4, 5) besteht, die im Bereich des Durchtrittsfreiraumes (10) fügbar sind, wobei der Durchtrittsfreiraum (10) von ein oder mehreren entfernbaren oder umschlagbaren Laschen (26, 26', 27, 27') der Grundplattenteile (4, 5) bildbar ist.

10. Dacheindeckungselement nach einem der Ansprüche 8 oder 9 oder insbesondere danach, **dadurch gekennzeichnet, dass** die Grundplattenteile (4, 5) zur Ausbildung unterschiedlich breiter Grundplatten (4, 5) zusammensteckbar sind.

11. Dacheindeckungselement nach einem der Ansprüche 8 bis 10 oder insbesondere danach, **dadurch gekennzeichnet, dass** die Grundplattenteile (4, 5) von ihrer Fügekante (24, 25) ausgehende Einschnitte (28) aufweist zur Ausbildung der entfernbaren oder umschlagbaren Laschen (26, 26', 27, 27') und/oder von der Fügekante Befestigungsschlitze (29) zur überlappenden Steckzuordnung der beiden Grundplattenteile (4, 5) ausgehen.

12. Dacheindeckungselement nach einem der Ansprüche 8 bis 11 oder insbesondere danach, **dadurch gekennzeichnet, dass** zumindest eines der Grundplattenteile (4, 5) einen hochgestellten Randabschnitt (30) ausbildet.

13. Dacheindeckungselement nach einem der Ansprüche 8 bis 12 oder insbesondere danach, **dadurch gekennzeichnet, dass** zumindest eines der Grundplattenteile (4, 5) kopfseitige Federstege (31) aufweist, die sich an der Unterseite einer kopfseitigen Dacheindeckungsplatte (2) abstützen.

14. Dacheindeckungselement nach einem der Ansprüche 9 bis 13 oder insbesondere danach, **dadurch gekennzeichnet, dass** das Abdichtelement (11) eine Manschette (15) ausbildet, die derart ausgebildet ist, dass ein zur Dachaußenseite weisender Durchtrittsbereich (13) für einen Durchtrittsschenkel (9"') des Befestigungselementes (9) des in einem Steildach eingebauten Dacheindeckungselement tiefer liegt, als eine zur Dachinnenseite weisende Durchtrittsöffnung (16) der Manschette (15).

15. Dacheindeckungselement nach einem der vorhergehenden Ansprüche oder insbesondere danach, **gekennzeichnet durch** ein am Sparren (7) oder einer Konterlatte (8) befestigbares Befestigungselement (9) mit einem etwa parallel zur Sparrenerstreckungsrichtung verlaufendem Durchtrittsschenkel (9"'), zu dem die Lippen (12, 12') im Wesentlichen parallel verlaufen.
